# EUROPEAN PATENT APPLICATION

(11) **EP 1 189 159 A1**
(43) Date of publication of application: **20.03.2002**
(21) Application number: 00120476.7
(22) Date of filing: 19.09.2000
(51) Int. Cl.: G06F 17/60

(54) **System for processing like-kind exchange transactions**

(71) Applicant: Niels Mache, 70469 Stuttgart (DE); Jung, Bernhard Dr., 33602 Bielefeld (DE); Morgan, Daniel T., Washington DC 20005-3333 (US)
(72) Inventor: Mache, Niels, 70174 Stuttgart (DE); Jung, Bernhard Dr., 33602 Bielefeld (DE); Morgan, Daniel T., 20005-3333 Washington (US)
(74) Representative: Rupp, Christian, Dipl.Phys.

(57) **Abstract**

The present invention utilizes a variety of strategies to reduce transaction costs through automation of the exchange process using Internet and computer technology and use of sophisticated formulas to maximize benefit for a particular user. The proposed technology will allow owners of property to significantly reduce the transaction costs currently incurred in completing §1031 LKE transactions.

The system consists of a Like-Kind Exchange (LKE) Broker 23 that performs the like-kind exchange logic, one or more databases 2 which are connected to the LKE broker 23, synchronization modules (LKEsync) 13 installed at the exchanger 24 for automatic data exchange and update, HTML browsers and electronic mail clients. The participants of the LKE transaction system are an arbitrary number of exchangers (the customers) 24, one or more Qualified Intermediaries (usually banks) 25 and one or more LKE brokers 23. The LKE broker 23 implements the like-kind exchange logic, controls information flow and manages data security and (digital) signing. The system uses a global network to exchange information between the participants.

## Description

The present invention relates to a method, apparatus and information system for processing transactions as f.e. like-kind exchange ("LKE") transactions under §1031 of the Internal Revenue Code of the United States of America.

### Field of the Invention:

The patent application involves the implementation of a distributed, Internet-based computing environment applicable f.e. for a Like-kind Exchange Program under §1031 of the Internal Revenue Code. The legal requirements and issues in completing a like-kind exchange are generally available. All section or "§" references are to the United States Internal Revenue Code of 1986, as amended, unless otherwise indicated. Information regarding completing a like-kind exchange includes §1031 of the Code, Internal Revenue Service regulations, rulings and guidance, various court cases, and numerous publications.

Currently most like-kind exchange ("LKE") transactions are limited to property with very significant sales proceeds because of the transaction costs incurred in completing the transaction in accordance with statutory requirements. The vast majority of this work is currently completed manually resulting in a relatively few large dollar transactions actually qualifying for the benefits provided by §1031. Congress enacted §1031 as a relief provision to defer current taxation if the investment in business or investment property remains substantially unchanged by retaining ownership in property that is like-kind to the exchanged property. The owner has continuously been invested in business or investment property.
§ 1031(a) provides that
*No gain or loss shall be recognized on the exchange of property held for productive use in* a *trade or business or for investment if such property is exchanged solely for property of like-kind which is to be held either for productive use in* a *trade or business or for investment.*

Thus, the four general requirements for non-recognition treatment under §1031 are:
(1) both the property surrendered and the property received must be held either for productive use in a trade or business, or for investment;
(2) the property surrendered and the property received must be of "like-kind";
(3) the property must not be described in the list of ineligible property contained in §1031(a)(2); and
(4) there must be an exchange, as distinguished from a sale and repurchase.

The requirement that the exchanged properties be of "like-kind" has reference to the nature or character of the property and not to its grade or quality. See Treas. Reg. §1.1031(a)-1(b). To qualify for like-kind exchange treatment, one kind or class of property may not be exchanged for property of a different kind or class. Depreciable tangible personal properties are of a like class if they are either within the same General Asset Class, as defined in Treas. Reg. §1.1031(a)-2(b)(2), or within the same Product Class, as defined in Treas. Reg. §1.1031(a)-2(b)(3). Treas. Reg. §1.1031(a)-2(b)(3) states that property within a Product Class consists of depreciable tangible property that is listed in a four-digit product class within Division D of the Standard Industrial Classification codes ("SIC codes"), set forth in Executive Office of the President, Office of Management and Budget, Standard Industrial Classification Manual (1987) ("SIC Manual").

Under the proposed methodology, the owners would be exchanging old property for new property to be used in their trade or business or held for investment. Since Treas. Reg. §1.1031(a)-2(b)(1) states that property will be considered to be like-kind if exchanged for property within the same General Asset Class ("GAC") or same Product Class, the properties exchanged do not have to be identical to one another.

Owners can ensure that the property being exchanged constitutes like-kind property by replacing relinquished property classified within one GAC with new property classified within the same GAC. For example, computer equipment is classified within GAC 00.12, Information Systems, and should only be replaced with property that also falls within GAC 00.12. More precisely, since Information Systems includes computers and their peripheral equipment used in administering normal business transactions and the maintenance of business records, their retrieval and analysis under GAC 00.12, a owner could replace an old mainframe supercomputer with a group of desktop or laptop computers, high speed printers and optical character readers or any other equipment described in GAC 00.12.

An "exchange" generally involves a reciprocal transfer of property as distinguished from a transfer of property for money or its equivalent. In the simplest example, a swap of a truck in Owner 1's possession for a truck from Owner 2 is an exchange whereas a sale by Owner 1 of a truck for cash, followed by a purchase by Owner 1 of a truck from Owner 2 using the cash from the initial sale is a sale and purchase.

It is often very difficult, if not impossible, for an owner to arrange for a simultaneous exchange of relinquished property for replacement equipment. The Code addresses this problem by permitting deferred exchanges. Under these rules, the owner must "identify" replacement equipment on or before the day which is 45 days after the date on which it transfers the relinquished property *and* must receive the replacement property no later than the earlier of (A) the day which is 180 days after the date on which the owner transfers the relinquished property and (B) the due date (determined with regard to extension) for the owner's tax return for the taxable year in which the transfer of the relinquished property occurs. The owner cannot actually or constructively receive the proceeds of the sale of the relinquished property until it actually receives the replacement property. Failure to satisfy any of these requirements results in a sale and purchase, a fully taxable transaction.

As a practical matter, it is impossible for property owners to acquire replacement property from the buyers of the relinquished property, a third party, generally called a "qualified intermediary," must be involved. The qualified intermediary is an unrelated party, such as a bank, that is used to facilitate the exchange.

The qualified intermediary must acquire the relinquished property from the owner, transfer the relinquished property to the purchaser, acquire the replacement equipment from the seller, and transfer the replacement equipment to the owner, as part of an overall exchange process. These transactions are accomplished largely through contractual provisions. The purchaser of the relinquished property and the seller of the replacement equipment have no direct dealings with the qualified intermediary; the qualified intermediary simply receives the proceeds from the sale of the old equipment and disburses those proceeds to purchase the replacement equipment.

### State of the Art

Currently most LKE transactions are completed *manually*. In a typical exchange situation, the property owner is assisted by a tax specialist (hence *broker*) who checks §1031 compliance conditions, performs the tax saving calculations, and prepares the legal documents. Disadvantages of manual procedures include (but are not limited to) high processing costs, long transaction times, and missed opportunities for exchanges. In effect these limitations restrict the application of like kind exchanges to a relatively small class of large dollar transactions.

Automation of LKE transactions using computer technology has the potential to overcome these limitations. A currently available software product in this context is the "Like-Kind Exchange vs. Sales Analyzer" by Denver Tax Software, Inc. (DTS) (www.denvertax.com). However, this product is run on a standard office or home PC whereas the present invention is concerned with an Internet based platform. More importantly, the "Like-Kind Exchange vs. Sales Analyzer" can only assist but not replace a human broker by performing compliance and benefit calculations.

### Object of the invention

It is the object of the present invention to effectively replace the broker by an network based platform that automates and optimizes all other work traditionally performed by a (human) broker.

The present invention proposes therefore an Internet-based platform for like kind exchanges or similar exchanges that (among other features)
- detects opportunities for, optimizes, initiates, and performs (LKE) transactions based on an owner's acquisition and disposition behaviour
- communicates necessary legal and other documents to all participants in like kind exchanges (owner/exchanger, qualified intermediary, ...) and
- is open for online consulting services and online adjustment of (LKE) system behaviour.

The present invention furthermore for the first time reveals related aspects of data exchange between (LKE) participants such as data formats, protocols, security/encryption, and digital signing of communicated documents.

### SUMMARY OF THE INVENTION

The present invention utilizes a variety of strategies to reduce transaction costs through automation of the exchange process using a network and computer technology and use of sophisticated formulas to maximize benefit for a particular user. The proposed technology will allow owners of property to significantly reduce the transaction costs currently incurred f.e. in completing §1031 LKE transactions.

The system consists of a broker that performs the exchange logic, one or more databases which are connected to the broker, synchronization modules installed at the exchanger for automatic data exchange and update, HTML browsers and electronic mail clients. The participants of the transaction system are an arbitrary number of exchangers (the customers), one or more Qualified Intermediaries (usually banks) and one or more brokers. The broker implements the exchange logic, controls information flow and manages data security and (digital) signing. The system uses a global network to exchange information between the participants.

Additionally, the broker may function as a service platform for offering services related to like-kind exchange such as consulting, system integration and management of digital certificates. The data being exchanged between the participants and the data processed by the broker may be encoded using Extensible Markup Language (XML). Still further, the data structures of the system are defined using a plurality of document type definitions (DTD). The broker may comprise a XML database for retrieval and storage of data. Optionally the broker may archive documents such as electronically signed reports in an additional database and/or computer readable media for long-term storage. Preferably, the system and methodologies of the invention are implemented as a distributed information system in connection with a multi-user computer network such as the Internet.

The present invention *automates* the exchange process using an Internet-based computing environment that (among other features)
- detects opportunities for, initiates, and performs transactions based on an owner's acquisition and disposition behaviour
- communicates necessary legal and other documents to the participants in like kind exchanges (owner/exchanger, qualified intermediary, ...)
- is open for online consulting services and online adjustment of system behaviour.

Novel aspects of the invention concern - in the context of automated transactions - the general system architecture of the Internet platform, data processing, exchange and/or storage based on documents in Extensible Markup Language (XML), the automated generation and transmission of legal documents to participants, a methodology for detection of opportunities with adjustable optimization criteria, XML-based methods for Internet-wide and local area data exchange, secure data transmission aspects, and an infrastructure for digital signing.

According to a first aspect of the invention a property exchange management system comprises
- a multi-user data network,
- at least one broker application implementing the exchange logic by controlling the flow of information in the system,
- at least one property exchanger as a client,
- and at least one qualified intermediary.

The broker, the property exchanger and the qualified intermediary communicate by means of the multi-user network.
At least one database can be connected to the broker.
The broker can be designed to detect opportunities for, initiates and performs property exchange transactions.
The broker can be designed to detect opportunities for, initiates and performs property exchange transactions based on the exchanger's acquisition and disposition behaviour.
The broker can be designed to edit legal documents to be transmitted to the qualified intermediary.
The property exchanger can comprise a synchronization module for automatic data exchange with the broker.
The synchronization module can be designed for a data exchange between a procurement or financial planning system of the exchanger and the broker.
The broker can be designed to exchange reports with the qualified intermediary which are digitally signed.

According to another aspect of the present invention a property exchange management method is proposed using:
- a multi-user data network,
- at least one broker application implementing the exchange logic by controlling the flow of information in the system,
- at least one property exchanger as a client,
- and at least one qualified intermediary.

The broker, the property exchanger and the qualified intermediary thereby communicate by means of the multi-user network.
The broker can detect automatically opportunities for, initiates and performs property exchange transactions.
The broker can detect opportunities for, initiates and performs property exchange transactions based on the exchanger's acquisition and disposition behaviour.
The broker can edit legal documents to be transmitted to the qualified intermediary.
The property exchanger can exchange data with the broker by means of a synchronization module.
The synchronization module can exchange data from a procurement or financial planning system of the exchanger with the broker.
The synchronization module can exchange information on sold and bought equipment as well as business plans with the broker.
The broker can exchange reports with the qualified intermediary which are digitally signed.
The like-kind transactions can be committed, signed or encrypted using public key infrastructure.

According to a still furthe aspect of the present invention a method for the automatic detection of like-kind exchanges is proposed comprising the steps of:
- selecting combinations of the property owner's pool of acquired and disposed assets, and
- matching the assets for a like-kind exchange.

The step of matching can be based on a utility function using at least one of the variables of:
- amount of taxable income realized on disposition of assets,
- proceeds realized on disposition of relinquished property,
- like-kind characteristics of both relinquished and acquired property,
- the date a new asset is acquired,
- tax cost for acquired asset, and
- the number of days that have passed since an asset was relinquished.
At least two variables can be weighted to combine for the utility function.
The variables of the asset selection can be customizable manually or automatically.
The variables of the asset selection can be customizable remotely over a multi-user data network.

According to a still further aspect of the present invention an optimization method for asset selection in like kind exchanges with adjustable parameters to meet needs of specific users, comprising
- maximization of deferrals of taxable income,
- minimization of bounded cash in a qualified intermediary account and
- minimization of potential profit deferral that is allowed to be unutilized after 180-days.

In the following preferred embodiments will be explained with reference to the figures of the enclosed drawings, such that further features, advantages and object will become evident for the man skilled in the art.
Figure 1 shows an overview of the software components of the proposed network platform,
Figure 2 shows the architecture of a broker of the platform of figure 1 in greater detail,
Figure 3 shows an exchange system of the platform of figure 1 in greater detail,
Figure 4 shows a qualified intermediary (QI) of the platform of figure 1 in greater detail,
Figure 5 shows a message transmission handshake between exchanger, LKE broker and qualified intermediary with exchanger's interaction, and
Figure 6 shows a message transmission handshake between exchanger, LKE broker and qualified intermediary without exchanger's interaction.

Note that in the following the invention will be explained by means of LKE transactions. However it is to be noted that it can be equally applied to all other types of comparable transactions.

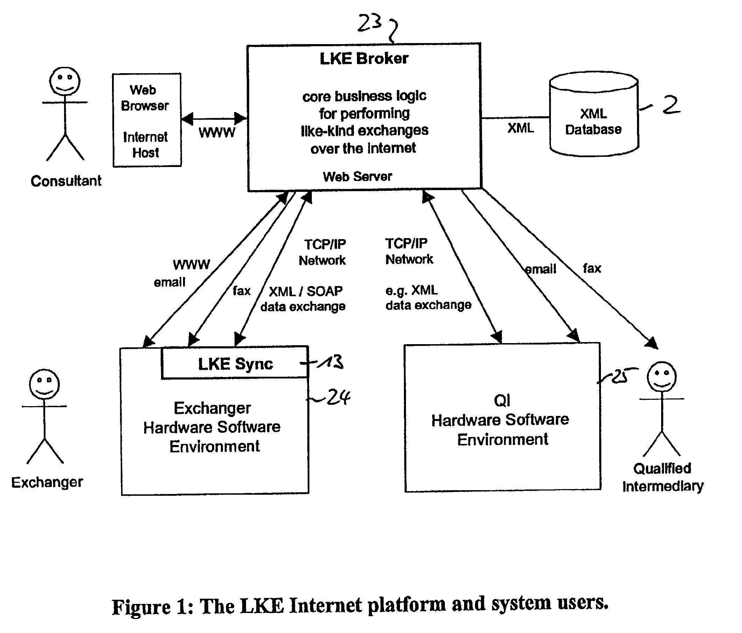

### Figure 1: LKE Internet Platform and System Users (Architecture of the Internet platform)

Figure 1 shows an overview of the software components of the proposed LKE Internet platform, the communication links within the platform and external systems, and the human users of the platform. The main software components of the system architecture therefore comprise the broker 23 that permanently runs on a server directly or indirectly connected (for example through a firewall) to the Internet and the Sync module logic 13 that is integrated into the exchanger's computing environment 24. Note that the Internet is just an example for a multi-user data network.

The software components include the web-based LKE Broker 23 that analyses and performs transactions and the LKE Sync 13 that is integrated into the exchanger's computing environment 24 and transmits property acquisition and disposition information to the LKE Broker 23. Human users of the system include (a representative) of the exchanger, a consultant, and (a representative) of the qualified intermediary 25. Communication uses Internet technology (WWW, email, and other techniques for data exchange) but also includes fax transmissions. Data representations for exchange and storage can to a large extent be based on XML.

Note that in the general case the LKE Broker 23 will serve several exchangers 24 (and connect to several instances of the LKE Sync 13) and several qualified intermediaries 25. Each broker 23 can be associated with several instances of the sync modules, i.e. may serve several exchangers.

The broker performs, among other things, all services traditionally performed by a human broker in transactions. These services include the selection of property for like-kind exchanges based on the exchanger's acquisition and disposition behaviour using the method later on. This selection method allows for interactive adjustment of key variables which is the basis for online consulting services as described later on.

The broker further prepares, digitally signs, and transmits legal documents to the qualified intermediary as described later on. The Sync module is integrated into the exchanger's computing environment. Among other things, its task is to automatically supply the broker with information about property acquisitions and dispositions occurring at the exchanger. The communication between the sync module and the broker is detailed further on.

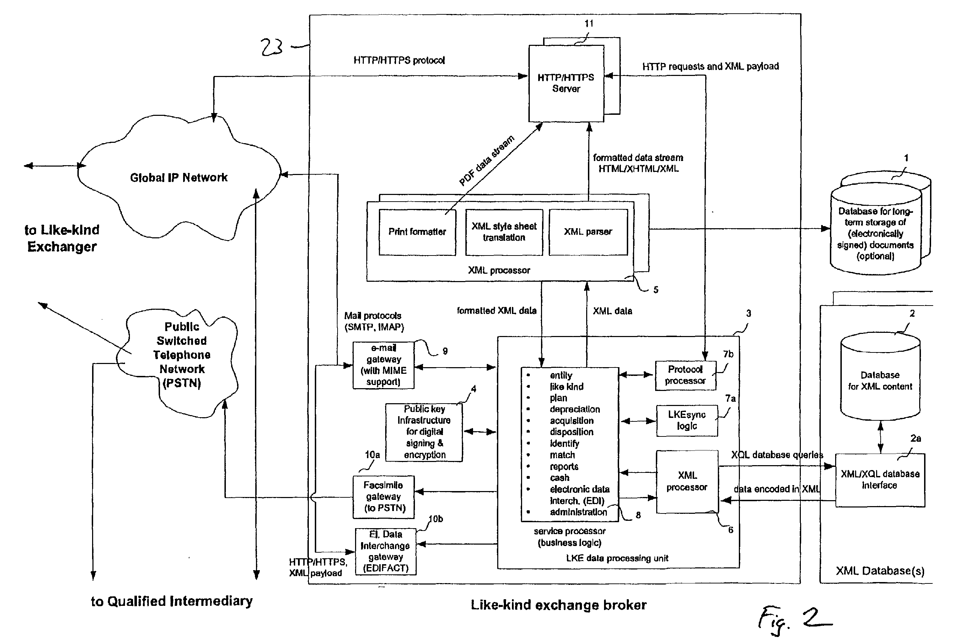

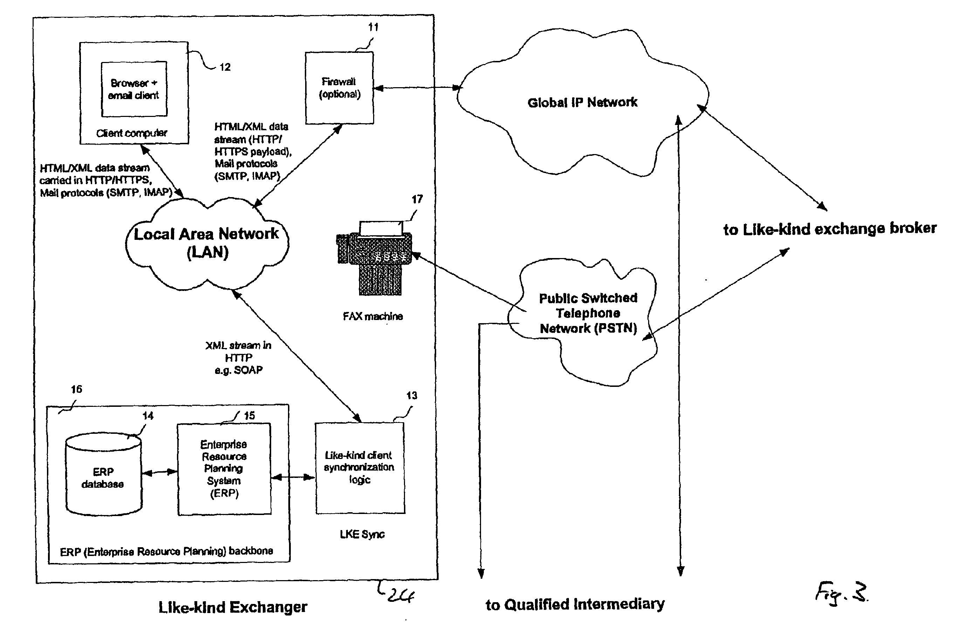

### Figure 2: Internal structure of the like-kind exchange (LKE) broker 23

The broker 23 comprises the processing units, databases, XML processors, email, facsimile and data exchange gateways and databases. The broker implements the like-kind exchange logic and manages data flow, storage and security. The LKE broker periodically exchanges information with the exchanger and the qualified intermediary (QI).

The LKE broker 23 is the core of the like-kind exchange transaction system. The LKE broker 23 implements like-kind exchange logic, controls information flow, communicates with the system database and performs data encryption and signing. The broker communicates with the exchanger (represented by a contact person of a company) and the Qualified Intermediary 25 (usually a bank) over a wide area network, e.g. the Internet, using an Internet browser and electronic mail with public key infrastructure. The exchange of reports, contracts and other legal documents as facsimile over PSTN (Public Switched Telecommunication Network) is also supported. Additionally to client or broker initiated data exchange the LKE synchronization module (LKE Sync) 13 periodically exchanges data with the LKE broker 23.

The like-kind exchange reports generated by the LKE broker are usually sent to the exchanger 24 and the qualified intermediary 25 in electronic form as signed and optionally encrypted electronic mail. The broker 23 utilizes a facsimile gateway to send reports to the exchanger 24 and QI as facsimile. This is quite useful for the purpose of redundancy or in the case the exchanger 24 or QI 25 do not have Internet access.

The following table describes the functional units of the LKE broker 23 (not limited to):

XML database(s) 2 with XQL (XML Query Language) interface 2a store like-kind data, customer profiles and more. See XML database further on for details.

An optional long-term storage database 1 is used for long-term storage of legal documents such as reports, signatures or facsimiles. The documents may be generated by the LKE broker 23, the QI 25 or the exchanger 24 and are not changed after being written. Thus the long-term database 1 implements write-once, read-multiple functionality. Commonly, optical media for digital data storage are used for long-term storage.

A LKE data processing unit (DPU) 3 of the LKE broker 23 implements the business logic. Internally the DPU 3 consist of the service processor 8 with its service modules, the XML processor 6 for XML processing of XML data, the synchronization logic 7a and the protocol processor 7b for communication over HTTP and SOAP protocols.

The data processing unit (DPU) 8 contains service modules such as Entity, Like-kind, Planning, Depreciation, Acquisition, Disposition, Identification, Matching, Reporting, Cash management, Electronic and Administration.
The XML processor 6 processes, parses and generates XML encoded data. The XML processor 6 communicates with the XML database(s) 2 and the service processor 8. The XML data is routed through the XML processor 6.

The LKE synchronization logic 7a synchronizes data stored at the exchangers procurement or financial management system with data stored on LKE broker. See LKE synchronization further on for details.

The protocol processor 7b implements communication protocols such as SOAP and (MIME encoded) email.

The XML formatter 5 formats XML encoded data from the LKE data processing unit 3 using style sheet processors and style sheets. The XML formatter may 5 generate PDF documents such as reports or HTML pages for browsers. The style sheets may be written in XSL or any other style sheet description language using a specialized style sheet processor.

A public key infrastructure 4 is used by the DPU 3 for digital signing (i.e. signature generation and check) and encryption. When a report is created the DPU 3 may sign and optionally encrypt the report using private/public keys stored in customer profiles of the XML database 2. Reports may be send as electronic mail (email), facsimile or using any electronic data interchange format (e.g. EDIFACT). In general reports or arbitrary documents generated by the system may be signed or encrypted and stored in the XML database 2 and/or the long-term storage database 1.

An electronic mail gateway(s) 9 with MIME support is directly connected to the global IP network. Documents such as reports or acknowledgement, which are send by email between clients 24, QI 25 and the broker 23, goes through the email gateway 9.

A facsimile gateway(s) 10a is provided to send reports and legal documents to the exchanger 24 or the QI 25. The facsimile gateway 10a transmits documents generated by the DPU 3 in facsimile format over the public switched telephone network to the receiver.

An Electronic Data Interchange gateway 10b is used for data interchange between the broker 23, the QI 25 and the exchanger 24. The use of the EDI gateway 10a simplifies the exchange of acquisition, deposition and other customer data. The primary use of the EDI gateway 10a is the exchange of customer data between customer based ERP systems and the LKE broker 23.

The HTTP server 11 with optional SSL (Secure Socket Layer) implements the HTTP protocol and manages the data communication over HTTP with the client's browsers and the LKE broker 23.

### Modules of the LKE Broker 23

**Entity Module** - The first module the user works with is the entity module. The system tracks all information by legal entity as defined in this module. In addition, entity specific information is defined in this module. The information input in this module is utilized in all other modules.
- User defines security rights in this module, only authorized users given rights to access system. Ability to limit rights to only specific parts of the system to control confidential information.
- User defines how the system communicates with Qualified Intermediary - automatic or after user review.
- Ability to define how assets are sorted.
- Ability to define differences between financial statement and tax cost.

**Like-Kind Module -** The Like-Kind Module is used to establish basis for the system to determine if specific assets are to be considered like-kind assets. To determine if specific assets are to be considered like-kind, the system uses the characteristics of a particular manufacturer model as defined in this module. Users define characteristics about a particular model of equipment once in the Like-Kind Module to ensure information integrity in the identification and matching modules. The Like-Kind Module is also utilized to insure integrity of specific asset information added in the Equipment Acquisition Module. Users need to input information about each model owned in the Like-Kind Module before adding information about a specific asset in the Equipment Acquisition Module. This procedure has been established to ensure that the system has the information necessary to identify as replacement property any acquired equipment and determine the characteristics of relinquished property.
- Defines all asset models of equipment using manufacturer model number pairs to avoid two manufacturers using the same model number.
- Like-kind characteristics of all asset models eligible for LKE are defined in this module.
- Integrity of potential replacement property identification and matching of replacement insured by requiring all assets being defined in this module.
- Provides flexibility in number of General Asset Classes or Product Classes handled by system while minimizing amount of information required to be entered about a specific asset.

**Plan Module -** The user includes information about planned purchases based on the manufacturer models included in the like-kind module. The planned purchases are used in the identification module for purposes of identifying potential replacement property
- User can import information about planned asset acquisitions.
- Planned purchase information is used in identification module to determine which assets should be chosen as potential replacement assets.
- Ability to utilize past asset acquisition information to project future planned purchases.
- Only assets defined in like-kind module can be added in business plan to ensure system integrity.

**Depreciation Module -** The user defines the depreciation methods to be utilized by each type of asset, for a particular reporting period, in each depreciation book that the user wants the system to track. The depreciation methods defined in this module are applied to the assets recorded in the acquisition module and determination of gain (loss) on sale for transactions recorded in the disposition module. This module also determines the basis adjustments resulting from completed like-kind exchanges defined by the matching module, recognized gain (loss) on disposition, and tracking the step-in-the-shoes depreciation method for relinquished assets. The benefits resulting from completing like-kind exchange transactions are determined by applying the logic in this module.
- The user defines for each asset type how it should be depreciated in each depreciation book based on period placed in service.
- Relinquished assets that are replaced in a qualified LKE exchange are assumed to be still owned for tax depreciation purposes, "step-in-shoes" depreciation method. The system tracks the depreciation of the relinquished assets in conjunction with the depreciation of the replacement asset.
- The system performs all depreciation, basis adjustment, and disposition gain (loss) calculations.
- Tracks additions to original asset.
- Tracks removable attachments that may or may not associated with a primary asset.

**Acquisition Module -** The assets owned and acquired by the user that may be the subject of a like-kind exchange transaction, either as a relinquished and/or replacement asset, are recorded in this module. Before any asset is recorded in this module, the definitions and controls need to be established in the entity, like-kind, cash and depreciation modules. The assets included in this module are used in performing the functions of the depreciation, depreciation, identification, matching, and cash modules.
- Users can manually input or electronically transfer information into the system for asset acquisitions. Asset information provided allows system to match eligible acquisitions with relinquished assets, determine how the asset will be depreciated, and determine distributions of cash from Qualified Intermediary account.
- Initial set-up of currently owned assets can be handled in essentially the same manner as new acquisitions.
- Tests input with definitions provided in various modules to determine if the asset has been properly defined. If asset is defined, then it is accepted into system, otherwise, the asset is rejected. The user will need to define asset in like-kind module before resubmitting In addition the information input in this module interacts with all other modules in the system.
- Allows user to associate additions with primary asset.
- Allows users to associate or disassociate a removable attachment with a primary asset.

**Disposition Module -** This module records information associated with a disposed assets. Disposed assets need to have been previously included in the acquisition module information. The disposition of an asset triggers the use of the matching and identification modules in completion of a like-kind exchange transaction. This module also interacts with the acquisition, cash and depreciation modules.
- Users can manually input or electronically transfer information into the system for asset dispositions. Asset information provided allows system to match eligible dispositions with acquired assets, determine net sales proceeds, information required to determine allocation of proceeds received from transaction and track deposits to the Qualified Intermediary account.
- The user can modify any removable attachments associated with the disposed asset.
- Allows users to provide trade-in and purchaser financing information.
- Tests input with definitions provided in various modules to determine if the asset has been properly defined. If asset is defined, then it is accepted into system, otherwise, the asset is rejected. The user will need to define asset in like-kind module before resubmitting addition.
- The information input in this module interacts with all other modules in the system.

**Identification Module -** The system uses a narrow estimated purchases price range and weighted probability to determine which planned purchases, included in the plan module, will be identified as potential replacement assets for relinquished assets. This module uses information from the like-kind, acquisition, disposition and matching modules in the determination of which assets planned to be purchased should be automatically chosen by the system as potential replacement property. The user also has the option to manually identify potential replacement property utilizing both the three asset and 200 percent identification methods. The assets identified as potential replacement property for a relinquished asset are utilized in the matching module.
- The system automatically identifies potential replacement assets and notifies QI prior to expiration of the 45-day identification period.
- Communication with QI is through both email and fax transmission as redundant notification procedure.
- System logic includes variables that customize the system to maximize realized benefits for system users.
- Allows user to manually identify potential replacement property rather than use automatic procedures.
- Transmits automatic identifications to user for their review prior to transmission to QI.

**Match Module -** The goal of the match module is to appropriately match relinquished and replacement assets in a qualified like-kind exchange. The match module uses information from the acquisition, disposition, like-kind, identification, and depreciation modules to complete matches. The system logic maximizes gain deferral potential in a particular match situation. The results in the matching module are incorporated in the depreciation module.
- The system automatically matches eligible replacement assets with relinquished assets and notifies QI prior to expiration of the 180-day replacement period.
- Communication with QI is through both email and fax transmission as redundant notification procedure.
- System logic includes variables that customize the system to maximize realized benefits for system users.
- Allows user to manually match replacement property rather than use automatic procedures.
- Transmits automatic matches to user for their review prior to transmission to QI.
- Co-ordinates with Cash Module in determining distributions from QI account.

**Report Module -** The report module interacts with all other system modules. It handles the automatic transmitting of required notifications to the qualified intermediary through both fax and email notification. The module also generates numerous reports to allow user to track system information, depreciation reports, information for tax reporting, and system administration.
- Provides user with a variety of information regarding transactions and assets tracked by the system.
- User can view information on screen in HTML, Microsoft Excel, or Adobe PDF formats.
- User can have reports generated and sent to them for their records in Microsoft Excel or Adobe PDF formats.
- User can specify reports that are to be automatically generated and distributed to a defined list of email addresses.
- Indefinite storage of identification and match reports transmitted to qualified intermediary.

**Cash Module -** The cash module tracks amounts due on the disposition of assets, payable on replacement assets and reconciliation with qualified intermediary account. This module also handles the tracking of debt associated with replacement and relinquished assets.
- Communicates with both user and QI in tracking cash receipts, outstanding receivable, distributions of excess cash, and distributions of cash for replacement assets.
- Handles tracking of trade-ins and debt associated with relinquished and acquired property.

**Administration Module -** As part of external consulting services, a consultant or "system administrator" can modify a number of variables used in the business logic to maximize available benefits for an individual user.
- Allows system administrator to change variables in business logic to meet needs of specific user. Each user has individual factual situation that requires modification of business logic to maximize user benefits. It is likely that for individual users, the variables utilized will change over time to meet the evolving needs of the user.

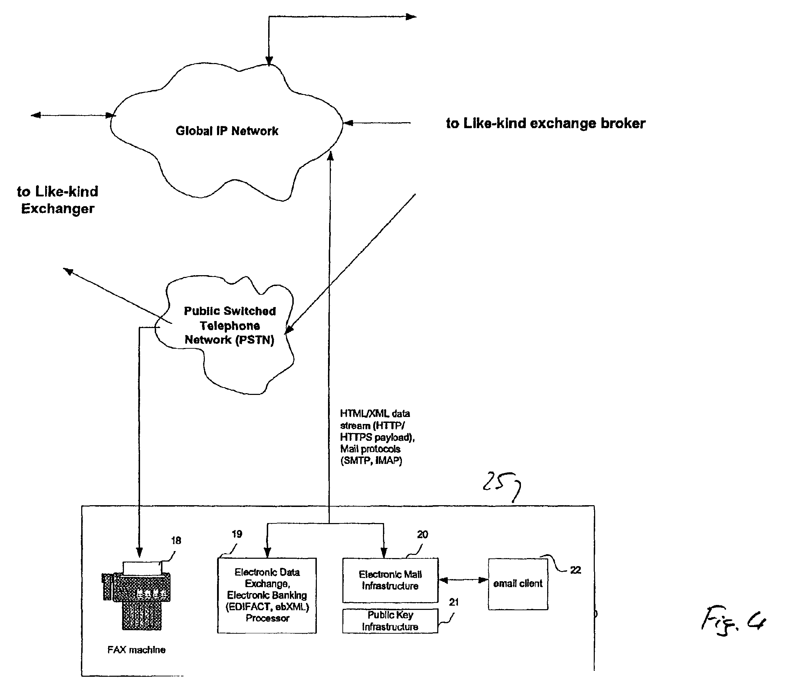

### Figure 3: Like-kind exchange system 24, exchanger side

The exchanger side of the like-kind exchange system 24 is shown in Figure 3. The exchanger 24 communicates with the LKE broker 23 over the global IP network using an Internet browser and an email client. The email client utilizes a public key infrastructure for digital signing and encryption. Reports and legal documents may also be transferred as facsimile. The (optional) LKE Sync logic 13 synchronizes data from the exchanger's procurement or financial management system with the LKE broker 23.

The system requirements of the exchanger 24 are f.e. an Internet browser, an email client with public key capability, Internet connection or alternatively a FAX machine. The LKE Sync synchronization logic 13 synchronizes data from the exchanger's procurement or financial management system (ERP, Enterprise Resource Planning system) with the LKE broker database. The LKE Sync module is optional. It is installed if the exchanger 24 uses an ERP system.

The exchanger side of the LKE system 24 has following functional units (not limited to):

An Internet browser (HTTP/S protocol) and an email client (with public key infrastructure) 12 are provided for the communication between the exchanger 24 and the LKE broker 23.
An optional firewall 11 may protect the exchanger's internal network against Internet access. The firewall 11 may limit the communication ports and protocols to HTTP and HTTPS (HTTP over Secure Socket Layer SSL).

The LKE Sync synchronization logic 13 automatically synchronizes data of the procurement or financial management system 16 with the LKE broker 23. The LKE Sync logic module 13 may utilize the SOAP communication protocol. The data exchanged between the LKE broker 23 and the LKE Sync 13 comprises information about sold or bought equipment (which is going to be exchanged by the LKE system) and business plans. This information has been entered into the ERP system by the exchanger 24. The information is transmitted as multiple messages which may be encoded using the Extensible Markup Language (XML). Still further, XML data may be transmitted via HTTP (HyperText Transmission Protocol) over Secure Socket Layer (SSL). The preferred embodiment uses a secured version of the XML based high-level messaging protocol SOAP (Simple Object Access Protocol) for information exchange.

An optional fax machine 17 for facsimile communication with the LKE broker 23 may be used to receive and send legal documents from and to the LKE broker 23.

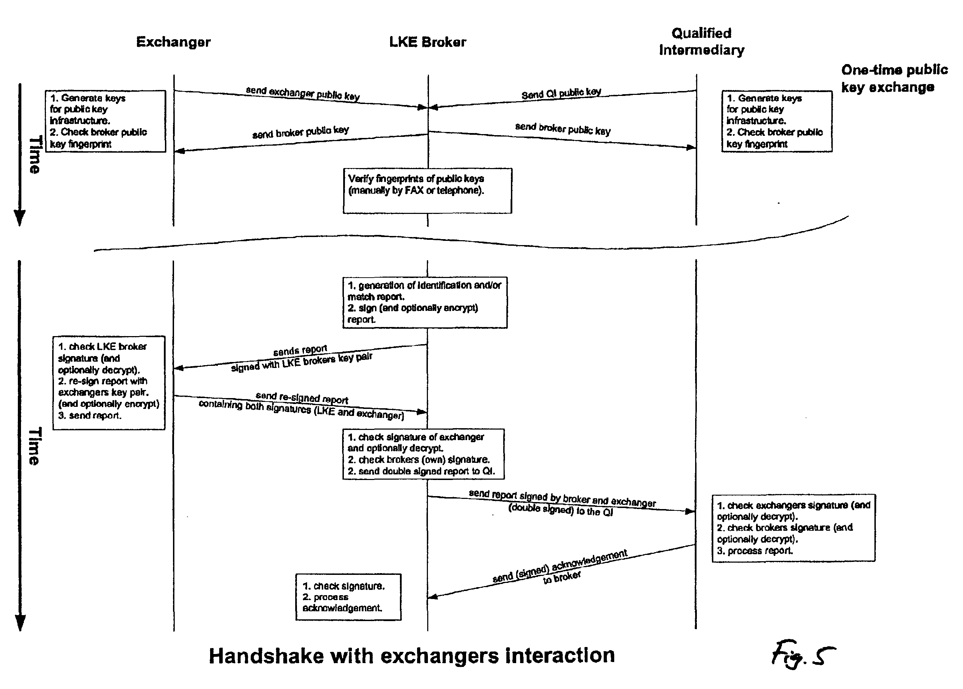

### Figure 4: Like-kind exchange system, qualified intermediary (QI) 25

The LKE broker 23 sends customer reports and other documents to the QI 25 using electronic mail and/or facsimile. The documents sent are digitally signed and optionally encrypted. Data may be transferred between the broker 23 and the QI 25 in standardized Electronic Data Exchange (EDI) format such as EDIfact or ebXML.

The qualified intermediary (QI) 25 receives documents from the LKE broker 23 and returns and acknowledges after reception of a document. The LKE broker 23 sends for example customer reports and other documents to the QI 25 using electronic mail and/or facsimile. The documents sent are digitally signed and optionally encrypted. Data may be transferred between the broker 23 and the QI 25 in standardized Electronic Data Exchange (EDI) format such as EDIfact or ebXML.

The qualified intermediary side 25 of the LKE system has following functional units (not limited to):
An email client (with public key infrastructure) 22 serves for communication with the LKE broker 23 over the Internet.
An optional fax machine 18 for facsimile communication with the LKE broker 23 may be used to receive and send legal documents from and to the LKE broker 23.
An Electronic Data Interchange gateway (EDI) 19 is used for data interchange between the broker 23, the QI 25 and the exchanger 24.

### XML database 2

The Extensible Markup Language (XML) database of the LKE system contains information as XML conform documents which includes the following information (but not limited to):
- General information on companies ("clients") using the system. This includes but is not limited to
   a) company name; address, phone number, FAX number, e-mail address of contact person at that company
   b) public key for encryption and signing of clients public key infrastructure
   c) bank account information, such as bank, account number, current balance, bank transaction history
   d) digital copy and summary information on client's legal agreement with qualified intermediary
   e) contact person at LKE-service provider for this client
   f) qualified intermediary utilized documents associated with completing LKE transactions
- User management data and user profiles including
   a) user names, address, phone, fax, email
   b) login name and password for access to LKE system
   c) customizable login conditions (e.g. restrict to view only, restrict to viewing/modification of certain legal entities, restrict access to certain modules)
   d) system use information such as last entity used, reports seen by user etc.
- Information on Qualified Intermediaries including
   a) company name; address, phone number, FAX number, e-mail addresses of contact persons at that qualified intermediary
   b) public key of public key infrastructure for encryption and signing of match and identification reports
   c) bank account information, such as bank account number, current balance, bank transaction history
- Information on LKE system processes including
   a) scheduled, ongoing, and completed LKE processes, such as matching, reporting, ...
   b) login history
   c) current sessions
- Information about specific legal entities associated with a client including
   a) tax return dates, end of tax year
   b) preferred sorting criteria for reporting and HTML presentation
   c) preference on automatic or manual trigger of LKE services
   d) variables influencing the behaviour of LKE matching algorithms
   e) GAC and SIC codes relevant to the legal entity
- Purchase Plan information including
   a) manufacturer, model number
   b) estimated cost
   c) number of items planned to be purchased
   d) estimated acquisition cost
   e) inflation adjustment percentage for use in automatic prediction of future purchases
- Information on specific assets owned or sold by an legal entity including
   a) manufacturer, make, serial number, customer specific identifier
   b) product family; GAC and SIC code
   c) code if asset is parent, attachment, or addition
   d) acquisition date, cost, tax-relevant adjustments to acquisition cost
   e) vendor, payment terms
   f) sales date, buyer, sales price, payment terms on sale, sale with or without attachments, sales invoice information, trade-in information, financing information
   g) LKE status related information: sales proceeds and acquisition costs utilized in LKE transactions; tax gain on sale; status information, if matching/identification processes have been run for asset; identification and matching trigger dates
- Asset depreciation related information, including
   a) list of applicable depreciation books including method and convention
   b) yearly asset depreciation per book; projected depreciation
   c) depreciation life of asset
   d) tax years
- Replacement identification data including
   a) identified replacements according to 3 asset identification (identified models or identified product families)
   b) identified replacements according to 200% method
   c) creation date of identifications
   d) aggregate projected acquisition costs of identified replacements
   e) user approval of identified replacements
- Replacement asset groupings (matches between sold and acquired assets) including
   a) groupings of sold / acquired assets
   b) aggregate sales proceeds / acquisition costs of match group items
   c) match group creation date
   d) predominate SIC or GAC code of match group
- Data related to like-kind product classification containing information such as
   a) List of all product classifications according to SIC system (four-digit code and description)
   b) List of all product classifications according to GAC system (code and description)
- XML database also contains reports / summary information in PDF and Microsoft Excel format on
   a) currently owned acquisitions
   c) current business plan
   d) like kind information such as SIC and GAC codes defined for all product families
   e) asset replacement history
   f) tax reports
- Electronic documents sent as notifications to Qualified Intermediary
   a) identification and match notifications as PDF document
   b) digital signature of documents sent to QI
   c) creation date / date of electronic transmission

### Method for selection of assets for like-kind exchanges

A further feature of an embodiment of the invention, i.e. the LKE Internet platform is its ability to automatically select combinations from the property owner's pool of acquired and disposed assets and to match them for an exchange. A necessary requirement is that all involved assets are of like kind. The matching method, in a first step, exploits information about the assets' SIC and GAC classifications to find such combinations.

Further criteria on the quality of matches include the following:
1. defer as much taxable income as possible
2. allow distribution of available cash out of QI account as quickly as possible and
3. minimize the amount of potential profit deferral that is allowed to be unutilized after 180-days.

These objectives individually do not result in the identification of the same assets for a particular exchange. Typically, these objectives should be balanced against each other (although in some business situations preference might be given to one objective over the others).

The invented method for asset selection in like kind exchanges is an informed search whose utility function is based on the following variables:
1. Amount of taxable income realized on disposition of asset
2. Proceeds realized on disposition of relinquished property.
3. Like-kind characteristics of both relinquished and acquired property.
4. The date a new asset is acquired.
5. Tax cost for acquired asset
6. The number of days that have passed since an asset was relinquished.

The variables are weighted to combine for the utility function. The parameters of the asset selection may be customized for a specific exchanger, either by human intervention or automatically.

### Possibility for online consulting services and adjustment of LKE system behaviour

The variables described - and thus the behaviour of the asset selection algorithm - can be adjusted over the WWW, e.g. by the exchanger or by an external consultant. The advantage of this feature is the possibility to adapt system behaviour to varying business conditions, e.g. due to seasonality, expansions, downsizing, mergers or others.

### Automated generation and transmission of legal documents to LKE participants

A legal requirement on the successful completion of a like kind exchange is that the exchange either is performed within 45 days of the disposition or within 180 days provided that compliant replacement assets have been identified within 45 days. To fulfil the legal requirement, documents asserting the exchange of property or the identification of replacement assets must be transmitted within the 45/180-day periods.

As a novel feature of the described LKE Broker, the current invention proposes the fully automated generation and transmission of electronic documents (Notice of Acquisition of Replacement Property, Notice of Identification of Replacement Property) between LKE participants. The documents are digitally signed when sent via email according to current US legislation.

Advantages of electronic document generation and transmission for like-kind exchanges include:
- Reduced costs: No human resources are spent on preparation of the legal documents.
- Improved quality of exchanges: In many cases best results for selection of replacement assets by the LKE Broker will be achieved if performed as closely as possible towards the end of the 45 day or 180 day periods. As the necessary documents can be generated at any time (24 hours a day, 7 days a week, including weekends) and email transmission takes place instantly a maximal time period can be utilized for optimization of replacement selection.

### Digital signing and secure transmission of LKE documents

The LKE broker documents may generate documents that require the acknowledgement (for example a signature) of the exchanger and documents which does not require further acknowledgement. The created documents may be of legal nature. Thus an authorization method and handshake protocol is required to guarantee the authenticity of the documents.

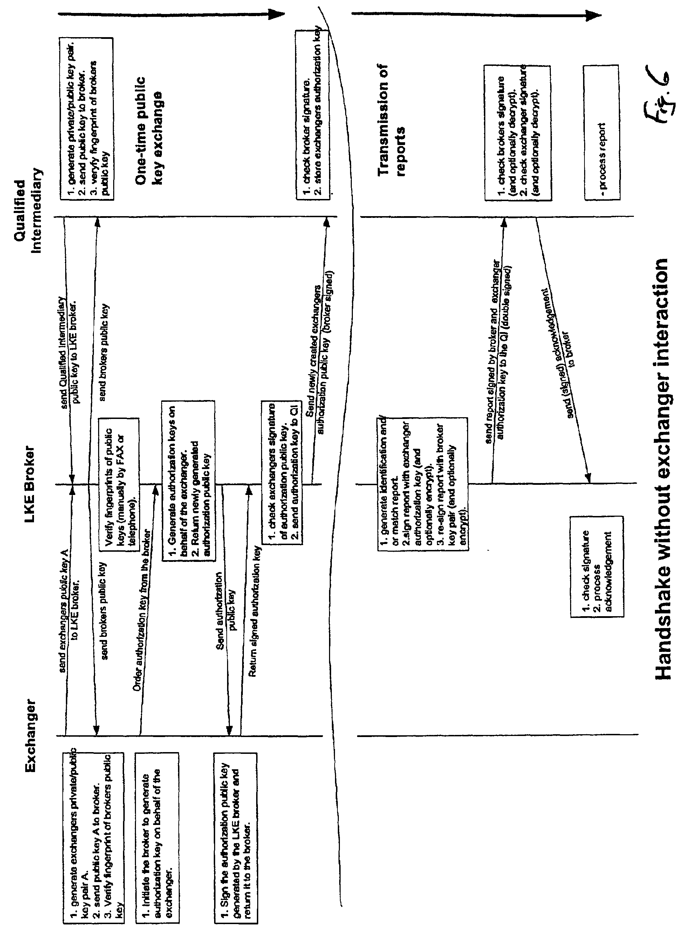

In Figure 5 the message transmission handshake between exchanger, LKE broker and qualified intermediary with exchanger's interaction is shown. The handshake protocol consists of two phases. The initialization phase 1 the public keys of the parties are exchanged, i.e. the exchanger and the QI sends their public keys to the LKE broker and the broker sends the broker public key to the exchanger and QI. The fingerprints of the public keys may be checked using another communication channel for example personal communication over telephone. Key exchange phase 1 is required only once. Phase 2 of the handshake protocol is repeated every time the broker generates a report.

In phase 2 the broker sends the exchanger a broker signed report. The report contains a successive transaction number that clearly identifies the report. The exchanger checks the broker signature, signs the report with its own key and returns the report to the broker. The LKE broker checks the exchanger's signature, checks its own signature and sends the double-signed report to the qualified intermediary. The qualified intermediary checks the signatures of the exchanger and the broker, processes the report and returns a signed acknowledgement to the broker. The acknowledgement contains the transaction number of the processed report. The broker checks the QI signature. The message exchange may be optionally encrypted.

Figure 6 shows the message transmission handshake between exchanger, LKE broker and qualified intermediary without exchanger's interaction. The handshake protocol consists of three phases. The initialization phase 1 the public keys of the parties are exchanged, i.e. the exchanger and the QI sends their public keys to the LKE broker and the broker sends the broker public key to the exchanger and QI. The fingerprints of the public keys may be checked using another communication channel for example personal communication over telephone. Key exchange phase 1 is required only once. In the successive phase 2 the exchanger asks the LKE broker to generate a key called "authorization"-key.

Key generation on behalf of the exchanger can be realized by sending a (signed) message from the exchanger to the broker asking for "authorization"-key generation or by interactive HTML (Web) forms which can be accessed by the exchanger only. For authorization key generation the broker first checks the authenticity of the exchanger by signature verification or checking the login password of Internet page. Then the broker generates an authorization public/private key pair for the exchanger. After key generation the broker sends the authorization public key to the exchanger. The exchanger signs the authorization public key sent by the broker (signed with the keys generated in phase 1) and returns the it to the broker again. The broker checks the exchanger's signature and signs the authorization key with its own broker keys. Then the broker sends the broker signed authorization key to the qualified intermediary (QI). The QI checks the broker signature and stores the exchanger authorization public key for future use.

Phase 3 of the handshake protocol is repeated every time the broker generates a report. In phase 3 the broker generates a report on behalf of the exchanger, signs it with the exchangers authorization key, signs it again with the broker key and sends the double-signed report to the QI. The report contains a successive transaction number that clearly identifies the report.

After reception of the report the QI first checks the broker signature and then the exchangers authorization signature. The QI then returns a signed acknowledgement to the broker. The acknowledgement contains the transaction number of the processed report. The broker checks the QI signature. The message exchange may be optionally encrypted.

### XML-based processing, exchange and/or storage of LKE data

The Extensible Markup Language, abbreviated XML, describes a class of data objects called XML documents and partially describes the behaviour of computer programs which process them. XML is in particular important for the realization of Electronic Data Interchange (EDI) using protocols like X12, EDIFACT and TRADACOMS. Among text-only based data exchange, signed e-mail reports for example, the LKE system may use the Extensible Markup Language XML for data exchange, data procession and data storage. An important requirement of the like-kind exchange system is that the system structure does not need to be changed for a long time of operation (20 years minimum) and is flexible enough to adopt changes of internal data structures and protocols for data interchange. The LKE system presented here realizes the required flexibility by using XML as the standard language for internal and external communication. Among other features the described system implements the following advantages:
- Uniform Interfaces:
   LKE-system may use uniform internal and external interfaces based on XML.
- Flexibility of Data Exchange:
   Data exchanged between internal and external modules (e.g. third-party modules) may use XML as the language for data exchange.
- Multivendor environments:
   XML may be used to exchange information in a multivendor environment.
- Data abstraction:
   XML enables the LKE-broker as well as third party applications to know when it is safe to ignore information they do not understand and when certain information must be processed.
- Custom data flexibility:
   XML schemes or Document Type Definitions (DTD) allow the LKE-broker to distinguish customer specific data.
- Language and format independence:
   XML output of the LKE-broker may be translated into virtually any language or document format such as HTML, WML (Wireless Markup Language) or PDF (Portable Document Format) using style sheets written for example in Extensible Style Sheet Language (XSL).
- Internationalization:
   For processing, interchange or storage the LKE-broker may express data using Unicode. Unicode provides a unique number for every character no matter what the platform, program or language is.
- Performance, scaleability and cost reduction:
   Currently most like-kind exchange ("LKE") transactions are limited to property with very significant sales proceeds because of the transaction expense. The LKE broker highly reduces transaction costs enabling processing of virtually any type of like-kind exchange transactions. The broker may use meta information for like-kind data that describes where the data is located (e.g. in a database). Comprising like-kind meta information the LKE system is highly scaleable. The broker can process a high number of daily transactions because multiple databases may be used simultaneously to increase capacity, performance and reliability. This technique helps also to reduce costs for data storage by using distributed (XML-) databases. Databases can be distributed in a local area network or a wide area network like the Internet.
- Long-term data availability:
   It can be assumed that data described in Extensible Markup Language can be processed even decades after its creation because XML processing software such as XML parsers and style sheet translators will be widely available during the next decades.

Figure 5 shows a message transmission handshake between exchanger, LKE broker and qualified intermediary with exchanger's interaction. The handshake protocol consists of two phases. The initialization phase 1 the public keys of the parties are exchanged, i.e. the exchanger and the QI sends their public keys to the LKE broker and the broker sends the broker public key to the exchanger and QI. The fingerprints of the public keys may be checked using another communication channel for example personal communication over telephone. Key exchange phase 1 is required only once.

Phase 2 of the handshake protocol is repeated every time the broker generates a report. In phase 2 the broker sends the exchanger a broker signed report. The report contains a successive transaction number that clearly identifies the report. The exchanger checks the broker signature, signs the report with its own key and returns the report to the broker. The LKE broker checks the exchanger's signature, checks its own signature and sends the double-signed report to the qualified intermediary. The qualified intermediary checks the signatures of the exchanger and the broker, processes the report and returns a signed acknowledgement to the broker. The acknowledgement contains the transaction number of the processed report. The broker checks the QI signature. The message exchange may be optionally encrypted.

Figure 6 shows a message transmission handshake between exchanger, LKE broker and qualified intermediary without exchanger's interaction. The handshake protocol consists of three phases. The initialization phase 1 the public keys of the parties are exchanged, i.e. the exchanger and the QI sends their public keys to the LKE broker and the broker sends the broker public key to the exchanger and QI. The fingerprints of the public keys may be checked using another communication channel for example personal communication over telephone. Key exchange phase 1 is required only once.

In the successive phase 2 the exchanger asks the LKE broker to generate a key called "authorization"-key. Key generation on behalf of the exchanger can be realized by sending a (signed) message from the exchanger to the broker asking for "authorization"-key generation or by interactive HTML (Web) forms which can be accessed by the exchanger only. For authorization key generation the broker first checks the authenticity of the exchanger by signature verification or checking the login password of Internet page. Then the broker generates an authorization public/private key pair for the exchanger. After key generation the broker sends the authorization public key to the exchanger. The exchanger signs the authorization public key sent by the broker (signed with the keys generated in phase 1) and returns it to the broker again. The broker checks the exchanger's signature and signs the authorization key with its own broker keys. Then the broker signed authorization key is sent by the broker to the qualified intermediary (QI). The QI checks the broker signature and stores the exchanger authorization public key for future use.

Phase 3 of the handshake protocol is repeated every time the broker generates a report. In phase 3 the broker generates a report on behalf of the exchanger, signs it with the exchangers authorization key, signs it again with the broker key and sends the double-signed report to the QI. The report contains a successive transaction number that clearly identifies the report. After reception of the report the QI first checks the broker signature and then the exchangers authorization signature. The QI then returns a signed acknowledgement to the broker. The acknowledgement contains the transaction number of the processed report. The broker checks the QI signature. The message exchange may be optionally encrypted.

## Claims

1. A property exchange management system, comprising:
- a multi-user data network,
- at least one broker application implementing the exchange logic by controlling the flow of information in the system,
- at least one property exchanger as a client,
- and at least one qualified intermediary;
wherein the broker, the property exchanger and the qualified intermediary communicate by means of the multi-user network.

2. A system according to claim 1,
wherein at least one database is connected to the broker.

3. A system according to claim 1,
wherein the broker is designed to detect opportunities for, initiates and performs property exchange transactions.

4. A system according to claim 3,
wherein the broker is designed to detect opportunities for, initiates and performs property exchange transactions based on the exchanger's acquisition and disposition behaviour.

5. A system according to claim 1,
wherein the broker is designed to edit legal documents to be transmitted to the qualified intermediary.

6. A system according to claim 1,
wherein the property exchanger comprises a synchronization module for automatic data exchange with the broker.

7. A system according to claim 6,
wherein the synchronization module is designed for a data exchange between a procurement or financial planning system of the exchanger and the broker.

8. A system according to claim 1,
wherein the broker is designed to exchange reports with the qualified intermediary which are digitally signed.

9. A property exchange management method using:
- a multi-user data network,
- at least one broker application implementing the exchange logic by controlling the flow of information in the system,
- at least one property exchanger as a client,
- and at least one qualified intermediary;
wherein the broker, the property exchanger and the qualified intermediary communicate by means of the multi-user network.

10. A method according to claim 9,
wherein the broker detects automatically opportunities for, initiates and performs property exchange transactions.

11. A method according to claim 10,
wherein the broker detects opportunities for, initiates and performs property exchange transactions based on the exchanger's acquisition and disposition behaviour.

12. A method according to claim 9,
wherein the broker edits legal documents to be transmitted to the qualified intermediary.

13. A method according to claim 9,
wherein the property exchanger exchanges data with the broker by means of a synchronization module.

14. A method according to claim 13,
wherein the synchronization module exchanges information from a procurement or financial planning system of the exchanger with the broker.

15. A method according to claim 14,
wherein the synchronization module exchanges information on sold and bought equipment as well as business plans with the broker.

16. A method according to claim 9,
wherein the broker exchanges reports with the qualified intermediary which are digitally signed.

17. A method according to claim 9,
wherein the like-kind transactions are committed, signed or encrypted using public key infrastructure.

18. Computer Software implementing a method according to claim 9.

19. An Internet platform implementing a method according to claim 9.

20. A method for the automatic detection of like-kind exchanges,
comprising the steps of:
- selecting combinations of the property owner's pool of acquired and disposed assets, and
- matching the assets for a like-kind exchange.

21. A method according to claim 20,
wherein the step of matching is based on a utility function using at least one of the variables of:
- amount of taxable income realized on disposition of assets,
- proceeds realized on disposition of relinquished property,
- like-kind characteristics of both relinquished and acquired property,
- the date a new asset is acquired,
- tax cost for acquired asset, and
- the number of days that have passed since an asset was relinquished.

22. A method according to claim 21,
wherein at least two variables are weighted to combine for the utility function.

23. A method according to claim 20,
wherein the variables of the asset selection are customizable manually or automatically.

24. A method according to claim 20,
wherein the variables of the asset selection are customizable remotely over a multi-user data network.

25. Computer Software implementing a method according to claim 20.

26. An Internet platform implementing a method according to claim 20.

27. An optimization method for asset selection in like kind exchanges with adjustable parameters to meet needs of specific users, comprising
- maximization of deferrals of taxable income,
- minimization of bounded cash in a qualified intermediary account and
- minimization of potential profit deferral that is allowed to be unutilized after a predetermined time period.

28. A computer software implementing a method according to claim 27.

29. An Internet based service platform implementing a method according to claim 27.
